# EUROPÄISCHE PATENTSCHRIFT

(11) **EP 4 206 156 B1**
(45) Veröffentlichungstag und Bekanntmachung des Hinweises auf die Patenterteilung: **15.05.2024**
(21) Anmeldenummer: 22150159.6
(22) Anmeldetag: 04.01.2022
(51) Int. Cl.: C03C 17/00

(54) **VERFAHREN ZUR BESCHICHTUNG VON GROSSFLÄCHIGEN GLASSUBSTRATEN**
METHOD FOR COATING LARGE-SCALE GLASS SUBSTRATES
PROCÉDÉ DE REVÊTEMENT DES SUBSTRATS DE VERRE DE GRANDE SURFACE

(43) Veröffentlichungstag der Anmeldung: 05.07.2023
(73) Patentinhaber: Bühler Alzenau GmbH, 63755 Alzenau (DE)
(72) Erfinder: FRANK, Marcus, 60439 Frankfurt (DE); STALDER, Bernhard, 9244 Niederuzwil (CH)
(74) Vertreter: Vossius & Partner Patentanwälte Rechtsanwälte mbB

(56) Entgegenhaltungen:
- CN-A- 101 585 664
- DE-A1-102018 101 816
- JP-A- 2011 153 035

## Beschreibung

Die vorliegende Offenbarung betrifft ein iteratives Verfahren zur Beschichtung von großflächigen Glassubstraten.

Aus der Mikroelektronik sind sogenannte Lift-off Verfahren (Fotolithographie) unter Verwendung von Fotolacken bekannt. Bei diesen Verfahren wird ein Fotolack auf ein Substrat aufgebracht und unter Verwendung einer Maske, an durch die Maske definierten Stellen, belichtet und entwickelt. Die nicht-belichteten Stellen des Fotolacks werden daraufhin unter Verwendung eines entsprechenden Lösungsmittels entfernt. In einem weiteren Schritt werden das Substrat bzw. der Fotolack mit einem Material beschichtet (alternativ kann ein Ätzverfahren zum Einsatz kommen, um Material abzutragen). Als letzter Schritt wird der Fotolack von dem Substrat mit einem entsprechenden Lösungsmittel entfernt und damit auch die auf dem Fotolack aufgebrachte Materialschicht. Das Substrat verbleibt somit mit der Materialschicht an den Stellen, an denen der Fotolack während der Beschichtung nicht vorhanden war.

Aufgrund der komplexen Arbeitsschritte in den bekannten Verfahren (Belacken, Belichten, Entwickeln) sind diese Verfahren in der Großflächenbeschichtung ungeeignet.

Im Automotive-Bereich werden alternative Maskierungstechnologien industriell angewendet. Die Maskierungsschichten werden hier mittels Siebdruckes aufgebracht. In einem weiteren Schritt, vor dem Sputterprozess, wird die Maskierungsschicht in einem Ofen getrocknet und anschließend mit einer Low-Emissivity (Low-E) Schicht versehen. Nach der Beschichtung wird die Maskierungsschicht eine bestimmte Zeit angelöst und anschließend mit der darüberliegenden Schicht abgewaschen. Zum Beispiel offenbaren die Dokumente DE 10 2018 101816, JP 2011 153035 oder CN 101 585 664 Verfahren zur Beschichtung von Glassubstraten.

Der vorliegenden Offenbarung liegt die Aufgabe zugrunde ein Verfahren bereitzustellen, das gegenüber den bekannten Verfahren eine effiziente Beschichtung, insbesondere von großflächigen Glassubstraten, ermöglichen.

Diese Aufgabe wird mit den Merkmalen der unabhängigen Patentansprüche gelöst. Die abhängigen Patentansprüche beziehen sich auf vorteilhafte Ausführungsformen.

Gemäß einem Aspekt der vorliegenden Offenbarung wird ein Verfahren zur Beschichtung von großflächigen Glassubstraten bereitgestellt, wobei das Verfahren die folgenden Schritte aufweist: a) Aufbringen einer wasserlöslichen Schicht auf mindestens einen ersten vorbestimmten Bereich der Oberfläche eines Glassubstrates, wobei mindestens ein zweiter vorbestimmter Bereich der Oberfläche des Glassubstrates von der wasserlöslichen Schicht frei bleibt; b) Beschichten der Oberfläche des Glassubstrates mit mindestens einer nicht wasserlöslichen Schicht; c) Entfernen der wasserlöslichen Schicht, wobei die Schritte a)-c) mehrmals hintereinander ausgeführt werden.

Das vorstehend beschriebene Verfahren im Automotive-Bereich ermöglicht es nur eine strukturierte Beschichtung zu realisieren. D.h. ein Teilbereich des Substrates ist nach Schritt c) mit einer gesputterten (oder einer lonenstrahl-) Beschichtung versehen, während die maskierten Teilbereiche unbeschichtet verbleiben. Wird das Verfahren gemäß einem Aspekt der vorliegenden Offenbarung wiederholt (iteratives Verfahren), können mehrere (je nach Anzahl der Iterationen) verschiedene gesputterte Schichten auf dem Substrat angeordnet werden (z.B. nach drei Iterationen ein Rot- Grün- und ein Blaufilter (RGB).

Verschiedene Ausführungsformen können vorzugsweise die folgenden Merkmale implementieren.

Die wasserlösliche Schicht ist vorzugsweise kein Fotolack.

Die wasserlösliche Schicht ist vorzugsweise wasserlöslich. Alternativ können weitere Lösungsmittel (z.B. Alkohole) zum Entfernen der wasserlöslichen Schicht verwendet werden. D.h. die wasserlösliche Schicht muss nicht ausschließlich wasserlöslich sein.

Das Glassubstrat weist vorzugsweise eine Fläche von 1 m² bis 60 m², vorzugsweise 19 m² bis 60 m², besonders bevorzugt 19 m² bis 39 m², auf.

Die Größe eines sogenannten Bandmaßes (ein Standardmaß in der Beschichtungsindustrie) für das Glassubstrat ist vorzugsweise 3.21 m × 6.00 m. Alternativ können die Glassubstrate auch 3.21m × 12m oder gar 3.21m × 18m groß sein. Die Maße nach unten können durch die Abstände der Transportrollen begrenzt sein. Typische minimale Maße des Glassubstrats sind 1m × 1m.

Der Schritt des Beschichtens folgt vorzugsweise unmittelbar auf den Schritt des Aufbringens der wasserlöslichen Schicht.

Mit anderen Worten, nach dem Aufbringen der wasserlöslichen Schicht und vor dem Beschichten werden vorzugsweise keine weiteren Verfahrensschritte, wie z.B. Belichtung und Entwicklung, durchgeführt. Somit wird auch auf den Einsatz und die Entsorgung der Chemikalien Fotolack und Entwickler verzichtet. Allerdings können bestimmte Trocknungsschritte zum Trocknen der wasserlöslichen Schicht nach dem Aufbringen der wasserlöslichen Schicht und vor dem Beschichten durchgeführt werden. D.h. es werden vorzugsweise zumindest keine Belichtungs- und/oder Entwicklungsschritte nach dem Aufbringen der wasserlöslichen Schicht und vor dem Beschichten durchgeführt.

Das Aufbringen der wasserlöslichen Schicht erfolgt vorzugsweise durch ein Druckverfahren, insbesondere durch ein Siebdruckverfahren, ein Offset-Druckverfahren, ein Walzendruckverfahren oder ein Digitaldruckverfahren.

Die wasserlösliche Schicht weist vorzugsweise eine im Vergleich zur Oberflächenenergie des Glassubstrates höhere Oberflächenspannung auf, so dass eine hydrophobe Glassubstrateigenschaft erzeugt wird. Beispielsweise liegt die Oberflächenenergie von gereinigtem Soda-Glas im Bereich von ca. 47mJ/m². Somit kann die Oberflächenspannung der wasserlöslichen Beschichtung vorzugsweise in einem Bereich von >60mJ/m² liegen. Die vorliegende Offenbarung ist nicht auf dieses bevorzugte Beispiel beschränkt und es sind auch andere Verhältnisse der Oberflächenspannung möglich.

Ferner kann mit entsprechenden Additiven die Oberflächenspannung in weiten Bereichen optimiert werden.

Die wasserlösliche Schicht weist vorzugsweise eine wasserlösliche Farbe auf, vorzugsweise eine wasserlösliche Tinte mit gelöstem Farbstoff, und besonders bevorzugt eine in Wasser dispergierte Pigmentfarbe.

Vorzugsweise weist das Verfahren einen Schritt zur Verringerung der Oberflächenenergie der Oberfläche des Glassubstrates vor Schritt a) auf, wobei der Schritt zur Verringerung der Oberflächenenergie der Oberfläche des Glassubstrates vorzugsweise Plasmapolymerisation von Hexamethyldisiloxan aufweist.

Das Beschichten der Oberfläche des Glassubstrates weist vorzugsweise ein gerichtetes Beschichtungsverfahren auf, vorzugsweise Sputtern oder lonenstrahlbeschichtung.

Das Entfernen der wasserlöslichen Schicht umfasst vorzugsweise das Entfernen der wasserlöslichen Schicht und sich auf der wasserlöslichen Schicht befindlichen nicht wasserlöslichen Schicht umfasst.

Das Entfernen der wasserlöslichen Schicht wird vorzugsweise unter Verwendung eines Lösungsmittels, vorzugsweise einer wasserhaltigen Flüssigkeit, durchgeführt.

Die nicht wasserlösliche Schicht befindet sich vorzugsweise nach der Beschichtung auch auf mindestens einem Teil der wasserlöslichen Schicht und vermischt sich beim Entfernen der wasserlöslichen Schicht unter Verwendung des Lösungsmittels mit dem Lösungsmittel.

Der Schritt zum Entfernen der wasserlöslichen Schicht umfasst vorzugsweise einen Schritt zum Filtern von der in dem Lösungsmittel befindlichen nicht wasserlöslichen Schicht.

Das Entfernen der wasserlöslichen Schicht wird vorzugsweise durch ein mechanisches Verfahren, vorzugsweise Bürsten, unterstützt.

Vorzugsweise weist das Verfahren einen Schritt zum Reinigen der Oberfläche des Glassubstrates vor dem Aufbringen der wasserlöslichen Schicht auf.

Der erste und zweite vorbestimmte Bereich sind vorzugsweise bei einer nachfolgenden Ausführung der Schritte a)-c) mindestens teilweise unterschiedlich zu einer vorausgegangen Ausführung der Schritte a)-c), um mehrere Strukturen, vorzugsweise optische Filter, nebeneinander anzuordnen.

Nachfolgend werden die vorstehend genannten Aspekte anhand von Ausführungsbeispielen und der Figuren näher erläutert. Es zeigen:
Fig. 1a)-d) eine schematische Darstellung der Verfahrensschritte eines Verfahrens gemäß einer Ausführungsform der Offenbarung,
Fig. 1e)-h) eine schematische Darstellung weiterer Verfahrensschritte eines Verfahrens gemäß einer Ausführungsform der Offenbarung, und
Fig. 2 einen Ablaufplan gemäß einer Ausführungsform der Offenbarung.

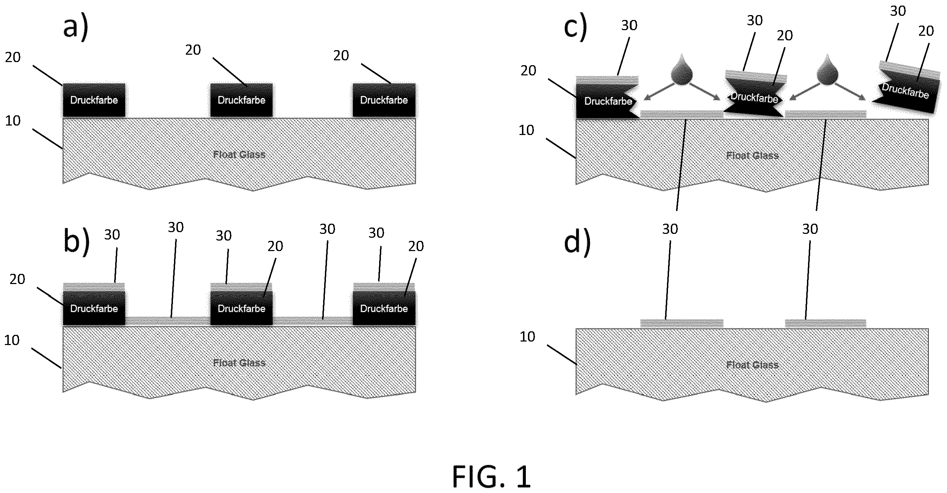

Fig. 1a)-d) zeigen die Schritte eines Verfahrens gemäß einer Ausführungsform der Offenbarung. Wie in Fig. 1a) zu erkennen, wird in einem ersten Schritt die Druckfarbe 20 an vorbestimmten Stellen auf das Glassubstrat 10 aufgebracht. Gemäß Fig. 1b) wird ein Material 30 aufgetragen. Das Material 30 befindet sich somit auf dem Glassubstrat 10 (an den freiliegenden Stellen) als auch auf der Druckfarbe 20. In einem weiteren Schritt gemäß Fig. 1c) wird die Druckfarbe 20 durch Wasser oder ein anderes Lösungsmittel von dem Glassubstrat 10 abgelöst. Dabei wird auch das Material 30, das sich auf der Druckfarbe 20 befindet, abgelöst. Das Material 30, das sich auf dem Glassubstrat 10 befindet, verbleibt auf dem Glassubstrat 10 und bildet somit die gewünschten Strukturen auf dem Glassubstrat 10 wie in Fig. 1d) gezeigt.

Nachfolgend werden nähere Details und Beispiele zu den vorstehend beschriebenen Schritten von Fig. 1a)-d) beschrieben.

Entsprechend der Offenbarung werden beispielsweise strukturierte optische Schichten 30 auf großen Flächen (Glassubstrat 10) hergestellt, indem mikrolithographischen Schritte durch direktes Bedrucken eines großen Substrates 10 (z.B. 3.21 m × 6 m) mit wasserlöslichen Farben ersetzt werden. Nach dem Waschen des Glassubstrates 10 wird auf den Flächen, auf welchen die optische Schicht 30 nicht erwünscht ist, eine wasserlösliche Schicht 20 gedruckt (z.B. durch Siebdruck, Digitaldruck etc.). Nach dem Maskierungsschritt wird das bedruckte Substrat 10 mit einer optischen Schicht 30 versehen (z.B. Sputtern, Bedampfen, etc.). Nach der Beschichtung wird das Substrat 10 erneut gewaschen, wodurch sich die unter der optischen Beschichtung 30 liegende Maskierungsschicht 20 im Wasser löst und die darauf befindliche optische Schicht 30 ebenfalls entfernt wird. Auf den vormals unbedruckten Flächen befindet sich nun die optische Schicht 30 auf dem Substrat 10. Die vorher maskierten Flächen auf dem Substrat 10 sind frei von jeder optischen Beschichtung 30.

Im Gegensatz zu Verfahren in der Mikroelektronik wird das vorliegende Verfahren auf einer wesentlich größeren Substratgröße (qm) durchgeführt und es wird eine andere Strukturgenauigkeit (^{~}100 µm) verlangt. Ferner wird bei dem vorliegenden Verfahren die Maskierung direkt aufgedruckt und muss nicht aufwändig durch Belacken, Belichten und Entwickeln hergestellt werden.

Um das Ablösen der Farben 20 nach der Beschichtung zu verbessern können im Hinblick auf Maskierungsfarbe, Substratmaterial und Beschichtungsverfahren folgende vorteilhafte Ausführungsformen eingesetzt werden.

Um möglichst steile Kanten zu erzielen, kann die Druckfarbe 20 das Glassubstrat 10 nicht benetzen, sondern eher hydrophobe Eigenschaften aufweisen. Physikalisch bedeutet das, dass die Druckfarbe 20 eine hohe Oberflächenspannung aufweist. Durch diese Eigenschaft werden bei der Bedruckung hohe Kontaktwinkel erreicht und damit steile "Maskierungskanten", die bei der anschließenden Beschichtung nicht mit dem Beschichtungsmaterial 30 belegt werden. Zudem kann die Maskierungsfarbe 20 wasserlöslich sein und darf diese Eigenschaft während des Beschichtungsprozesses nicht verlieren, insbesondere nicht durch Vakuumbeschichtungsverfahren (Druck <10^-3 mbar), Einwirkung von Plasmen, UV-Bestrahlung und Temperaturen zwischen 50°C und 80°C. Besonders geeignet sind dabei in Wasser dispergierte Pigmentfarben, die nach dem Verdunsten des Wassers kreideähnliche Schichten zurücklassen, die sich nach der Beschichtung mit Wasser ablösen lassen. Um eine ausreichende Opazität zu erreichen, ist es vorteilhaft, den Pigment- bzw. Extendergehalt der Druckfarbe 20 soweit zu erhöhen, bis ein ausreichender Deckungsgrad des Substrats 10 durch die Farbe 20 erreicht wird. Alternativ sind auch wasserlösliche Tinten mit gelösten Farbstoffen denkbar, die dieselben Eigenschaften (Opazität, Oberflächenspannung) aufweisen.

Um die genannten hohen Kontaktwinkel zu erreichen kann alternativ oder zusätzlich die Oberflächenenergie der zu beschichtenden Oberfläche durch eine geeignete Beschichtung verringert werden (z.B. durch Plasmapolymerisation von Hexamethyldisiloxan (HMDSO)).

Um zu vermeiden, dass steil ausgebildete Kanten der Maskierung nicht beschichtet werden, eignen sich "stark gerichtete" Beschichtungsverfahren, vorzugsweise Sputtern oder lonenstrahlbeschichtung. Isotrope Beschichtungsverfahren, wie Atomic Layer Deposition (ALD) oder Plasma Enhanced Chemical Vapor Deposition (PECVD) sind dagegen weniger geeignet.

An den Prozessschritt des Ablösens der Druckfarbe 20 (Fig. 1c)) mit der darauf befindlichen Beschichtung 30 werden vorzugsweise ebenfalls hohe Anforderungen gestellt. Einerseits sollte die Druckfarbe 30 komplett gelöst werden, damit die darauf befindliche Beschichtung 20 vollständig vom Substrat 10 getrennt wird. Geschieht dies mit mechanischer Unterstützung (e.g. Bürsten), sollte die Farbe 20 entfernt werden, ohne das darunterliegende Substrat 10 sowie die auf dem Substrat 10 verbleibende Beschichtung 30 mechanisch zu schädigen (Kratzer, Ausbrüche an den Kanten der Beschichtungsstruktur) oder gar abzulösen.

Der Prozessschritt des Ablösens kann beispielsweise aufweisen: 1. das Substrat 10 wird mit dem Lösungsmittel (vorzugsweise Wasser) besprüht oder übergossen. Zur Beschleunigung ist kann das Lösungsmittel warm sein (z.B. 30°C); 2. das Lösungsmittel verweilt auf dem Substrat 10 bis sich die Druckfarbe 30 unter der Beschichtung 20 weitestgehend aufgelöst hat; 3. das Lösungsmittel wird mit der teilgelösten Druckfarbe 30 und der darüberliegenden Beschichtung 20 mit einem weiteren Lösungsmittel gespült und die Reste mit weichen Walzenbürsten (lange, dünne Borsten) vollständig entfernt.

Nach dem erfolgreichen Entfernen der Druckfarbe 20 vom Substrat 10 ist diese im Lösungsmittel aufgelöst. Zusätzlich befinden sich Teile der Beschichtung 30 im Lösemittel, die durch das Auflösen der Druckfarbe 20 vom Substrat 10 getrennt wurden. Diese sehr kleinen Teile (^{~}10µm-100µm) sollten nicht mehr auf das Substrat 10 gelangen, damit diese sich dort nicht ablagern oder antrocknen (Adhäsion). Um eine hohe Konzentration dieser Beschichtungspartikel im Lösungsmittel zu vermeiden, können diese vorzugsweise kontinuierlich aus dem Lösungsmittel herausgefiltert werden. Neben wasserlöslichen Substanzen können auch alternative Lösungsmittel für den Lift-off-Schritt (Fig. 1c)) eingesetzt werden (z.B. Alkohole o.ä.).

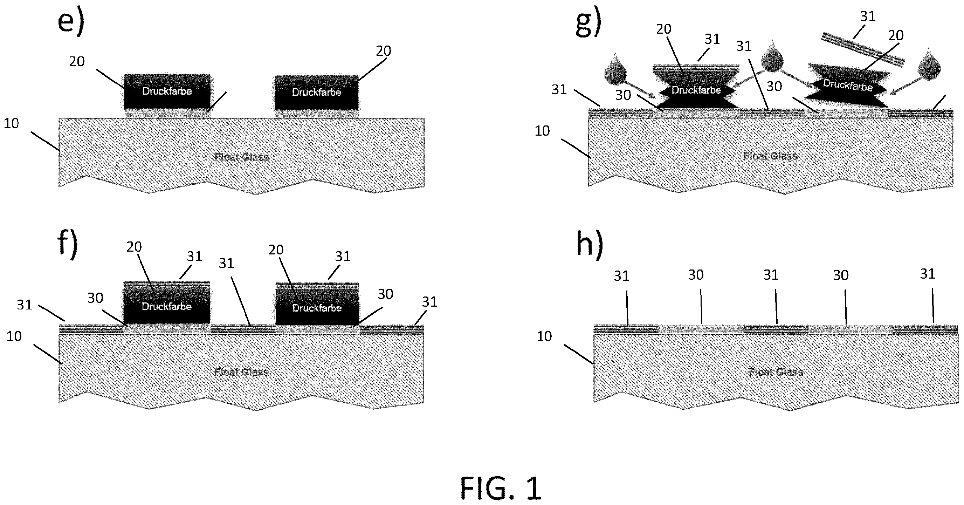

Wie im Ausführungsbeispiel gemäß Fig. 1 gezeigt, wird im ersten Schritt (Fig. 1a)) ein Glassubstrat 10 partiell mit einer wasserlöslichen Substanz 20 bedruckt (Maskierung). Im zweiten Schritt (Fig. 1b)) wird das partiell bedruckte Substrat 10 mit einer Schicht 30 (z.B. einem Interferenzschichtsystem) beschichtet. Dieses Interferenzschichtsystem 30 kann verschiedene Funktionen erfüllen (Low-e, AR, Dichroitischer Filter oder Spiegel etc.). Nach der Beschichtung (Fig. 1c)) wird die aufgedruckte Substanz 30 in einem Waschprozess gelöst und gemeinsam mit dem darauf abgeschiedenen Interferenzschichtsystem entfernt (Lift-off). Zurück bleibt ein Substrat, das partiell mit einem Interferenzschichtsystem beschichtet ist (Fig. 1d)).

Fig. 1e)-h) zeigen weitere Schritte des Verfahrens gemäß einer Ausführungsform der Offenbarung. Die Schritte von Fig. 1e)-h) entsprechen im Wesentlichen einer Wiederholung der Schritte von Fig. 1a)-d), wobei sich vorzugsweise die mit Druckfarbe 20 aufgebrachten Bereiche und/oder das aufgebrachte Material 31 gemäß Fig. 1e)-h) von den Bereichen bzw. dem Material 30 der Schritte von Fig. 1a)-d) zumindest teilweise unterscheiden.

Wie in Fig. 1e) zu erkennen, wird in einem auf Schritt von Fig. 1d) folgenden Schritt die Druckfarbe 20 an vorbestimmten Stellen (hier an den Stellen des ersten Interferenzschichtsystems 30) auf das Glassubstrat 10 aufgebracht. Gemäß Fig. 1f) wird ein Material 31 aufgetragen, vorzugsweise ein Material 31, das sich von dem Material 30 aus den Schritten von Fig. 1a)-d) unterscheidet. Das Material 31 befindet sich somit auf dem Glassubstrat 10 (an den freiliegenden Stellen, z.B. an Stellen, an denen sich das Material 30 nicht befindet) als auch auf der Druckfarbe 20. In einem weiteren Schritt gemäß Fig. 1g) wird die Druckfarbe 20 durch Wasser oder ein anderes Lösungsmittel von dem Glassubstrat 10 abgelöst. Dabei wird auch das Material 31, das sich auf der Druckfarbe 20 befindet, abgelöst. Das Material 31, das sich auf dem Glassubstrat 10 befindet, verbleibt auf dem Glassubstrat 10 und bildet somit die gewünschten Strukturen auf dem Glassubstrat 10 wie in Fig. 1h) gezeigt. Vorzugsweise liegen die Bereiche mit dem Material 31 angrenzend an Bereiche mit Material 30. Das Material 31 kann aber auch in einem vom Material 30 entfernten Bereich liegen, d.h. das Material 31 kann nicht (oder nur teilweise) an das Material 30 angrenzen.

Die vorstehend mit Bezug auf Fig. 1a)-d) ausgeführten Schritte und Bedingungen gelten gleichermaßen für die Schritte von Fig. 1e)-h) und werden an dieser Stelle nicht wiederholt.

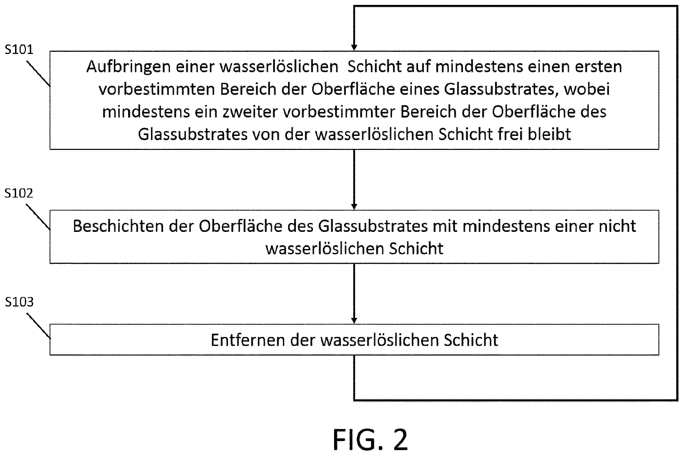

Fig. 2 zeigt einen Ablaufplan mit Schritten S101-S103 eines Verfahrens zur Beschichtung von großflächigen Glassubstraten gemäß einer Ausführungsform der Offenbarung. Das Verfahren gemäß Fig. 2 weist die folgenden Schritte auf.

S101: Aufbringen einer wasserlöslichen Schicht auf mindestens einen ersten vorbestimmten Bereich der Oberfläche eines Glassubstrates, wobei mindestens ein zweiter vorbestimmter Bereich der Oberfläche des Glassubstrates von der wasserlöslichen Schicht frei bleibt.

S102: Beschichten der Oberfläche des Glassubstrates mit mindestens einer nicht wasserlöslichen Schicht.

S103: Entfernen der wasserlöslichen Schicht.

Die Schritte a)-c) werden vorzugsweise mehrmals hintereinander ausgeführt.

In einer Ausführungsform weist das Glassubstrat eine Fläche von 1 m² bis 60 m², vorzugsweise 19 m² bis 60 m², besonders bevorzugt 19 m² bis 39 m2, auf.

In einer Ausführungsform folgt der Schritt des Beschichtens unmittelbar auf den Schritt des Aufbringens der wasserlöslichen Schicht.

In einer Ausführungsform erfolgt das Aufbringen der wasserlöslichen Schicht durch ein Druckverfahren, insbesondere durch ein Siebdruckverfahren, ein Offset-Druckverfahren, ein Walzendruckverfahren oder ein Digitaldruckverfahren.

In einer Ausführungsform weist die wasserlösliche Schicht eine im Vergleich zur Oberflächenenergie des Glassubstrates hohe Oberflächenspannung auf, so dass eine hydrophobe Glassubstrateigenschaft erzeugt wird.

In einer Ausführungsform weist die wasserlösliche Schicht eine wasserlösliche Farbe auf, vorzugsweise eine wasserlösliche Tinte mit gelöstem Farbstoff, und besonders bevorzugt eine in Wasser dispergierte Pigmentfarbe.

In einer Ausführungsform weist das Verfahren einen Schritt zur Verringerung der Oberflächenenergie der Oberfläche des Glassubstrates vor Schritt a) auf, wobei der Schritt zur Verringerung der Oberflächenenergie der Oberfläche des Glassubstrates vorzugsweise Plasmapolymerisation von Hexamethyldisiloxan aufweist.

In einer Ausführungsform weist das Beschichten der Oberfläche des Glassubstrates ein gerichtetes Beschichtungsverfahren auf, vorzugsweise Sputtern oder lonenstrahlbeschichtung.

In einer Ausführungsform umfasst das Entfernen der wasserlöslichen Schicht das Entfernen der wasserlöslichen Schicht und sich auf der wasserlöslichen Schicht befindlichen nicht wasserlöslichen Schicht umfasst.

In einer Ausführungsform wird das Entfernen der wasserlöslichen Schicht unter Verwendung eines Lösungsmittels, vorzugsweise einer wasserhaltigen Flüssigkeit, durchgeführt.

In einer Ausführungsform befindet sich die nicht wasserlösliche Schicht nach der Beschichtung auch auf mindestens einem Teil der wasserlöslichen Schicht und vermischt sich beim Entfernen der wasserlöslichen Schicht unter Verwendung des Lösungsmittels mit dem Lösungsmittel.

In einer Ausführungsform umfasst der Schritt zum Entfernen der wasserlöslichen Schicht einen Schritt zum Filtern von der in dem Lösungsmittel befindlichen nicht wasserlöslichen Schicht.

In einer Ausführungsform wird das Entfernen der wasserlöslichen Schicht durch ein mechanisches Verfahren, vorzugsweise Bürsten, unterstützt.

In einer Ausführungsform weist das Verfahren einen Schritt zum Reinigen der Oberfläche des Glassubstrates vor dem Aufbringen der wasserlöslichen Schicht auf.

In einer Ausführungsform sind der erste und zweite vorbestimmte Bereich bei einer nachfolgenden Ausführung der Schritte a)-c) mindestens teilweise unterschiedlich zu einer vorausgegangen Ausführung der Schritte a)-c), um mehrere Strukturen, vorzugsweise optische Filter, nebeneinander anzuordnen.

Obwohl die Offenbarung mittels der Figuren und der zugehörigen Beschreibung dargestellt und detailliert beschrieben ist, sind diese Darstellung und diese detaillierte Beschreibung illustrativ und beispielhaft zu verstehen und nicht als die Offenbarung einschränkend. Es versteht sich, dass Fachleute Änderungen und Abwandlungen machen können, ohne den Umfang der folgenden Ansprüche zu verlassen. Insbesondere umfasst die Offenbarung ebenfalls Ausführungsformen mit jeglicher Kombination von Merkmalen, die vorstehend zu verschiedenen Aspekten und/oder Ausführungsformen genannt oder gezeigt sind.

Die Offenbarung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Verfahren zur Beschichtung von großflächigen Glassubstraten (10), wobei das Verfahren die folgenden Schritte aufweist:
a) Aufbringen einer wasserlöslichen Schicht (20) auf mindestens einen ersten vorbestimmten Bereich der Oberfläche eines Glassubstrates (10), wobei mindestens ein zweiter vorbestimmter Bereich der Oberfläche des Glassubstrates (10) von der wasserlöslichen Schicht (20) frei bleibt;
b) Beschichten der Oberfläche des Glassubstrates (10) mit mindestens einer nicht wasserlöslichen Schicht (30);
c) Entfernen der wasserlöslichen Schicht (20),
wobei die Schritte a)-c) mehrmals hintereinander ausgeführt werden.

2. Verfahren nach Anspruch 1, wobei das Glassubstrat (10) eine Fläche von 1 m² bis 60 m², vorzugsweise 19 m² bis 60 m², besonders bevorzugt 19 m² bis 39 m², aufweist.

3. Verfahren nach Anspruch 1 oder 2, wobei der Schritt des Beschichtens unmittelbar auf den Schritt des Aufbringens der wasserlöslichen Schicht (20) folgt.

4. Verfahren nach einem der Ansprüche 1 bis 3, wobei das Aufbringen der wasserlöslichen Schicht (20) durch ein Druckverfahren erfolgt, insbesondere durch ein Siebdruckverfahren, ein Offset-Druckverfahren, ein Walzendruckverfahren oder ein Digitaldruckverfahren.

5. Verfahren nach einem der Ansprüche 1 bis 4, wobei die wasserlösliche Schicht (20) eine im Vergleich zur Oberflächenenergie des Glassubstrates eine höhere Oberflächenspannung aufweist, so dass eine hydrophobe Glassubstrateigenschaft erzeugt wird.

6. Verfahren nach einem der Ansprüche 1 bis 5, wobei die wasserlösliche Schicht (20) eine wasserlösliche Farbe aufweist, vorzugsweise eine wasserlösliche Tinte mit gelöstem Farbstoff, und besonders bevorzugt eine in Wasser dispergierte Pigmentfarbe.

7. Verfahren nach einem der Ansprüche 1 bis 6, mit einem Schritt zur Verringerung der Oberflächenenergie der Oberfläche des Glassubstrates (10) vor Schritt a), wobei der Schritt zur Verringerung der Oberflächenenergie der Oberfläche des Glassubstrates (10) vorzugsweise Plasmapolymerisation von Hexamethyldisiloxan aufweist.

8. Verfahren nach einem der Ansprüche 1 bis 7, wobei das Beschichten der Oberfläche des Glassubstrates (10) ein gerichtetes Beschichtungsverfahren aufweist, vorzugsweise Sputtern oder lonenstrahlbeschichtung.

9. Verfahren nach einem der Ansprüche 1 bis 8, wobei das Entfernen der wasserlöslichen Schicht (20), das Entfernen der wasserlöslichen Schicht (20) und sich auf der wasserlöslichen Schicht (20) befindlichen nicht wasserlöslichen Schicht (30) umfasst.

10. Verfahren nach einem der Ansprüche 1 bis 9, wobei das Entfernen der wasserlöslichen Schicht (20) unter Verwendung eines Lösungsmittels, vorzugsweise einer wasserhaltigen Flüssigkeit, durchgeführt wird.

11. Verfahren nach Anspruch 10, wobei sich die nicht wasserlösliche Schicht (30) nach der Beschichtung auch auf mindestens einem Teil der wasserlöslichen Schicht (20) befindet und beim Entfernen der wasserlöslichen Schicht (20) unter Verwendung des Lösungsmittels mit dem Lösungsmittel vermischt, wobei der Schritt zum Entfernen der wasserlöslichen Schicht (20) einen Schritt zum Filtern von der in dem Lösungsmittel befindlichen nicht wasserlöslichen Schicht (30) umfasst.

12. Verfahren nach einem der Ansprüche 1 bis 11, wobei das Entfernen der wasserlöslichen Schicht (20) durch ein mechanisches Verfahren, vorzugsweise Bürsten, unterstützt wird.

13. Verfahren nach einem der Ansprüche 1 bis 12, mit einem Schritt zum Reinigen der Oberfläche des Glassubstrates (10) vor dem Aufbringen der wasserlöslichen Schicht (20).

14. Verfahren nach einem der Ansprüche 1 bis 13, wobei der erste und zweite vorbestimmte Bereich bei einer nachfolgenden Ausführung der Schritte a)-c) mindestens teilweise unterschiedlich zu einer vorausgegangen Ausführung der Schritte a)-c) sind, um mehrere Strukturen, vorzugsweise optische Filter, nebeneinander anzuordnen.

## Claims

1. A method for coating large-scale glass substrates (10), the method comprising the following steps:
a) applying a water-soluble layer (20) to at least a first predetermined region of the surface of a glass substrate (10), wherein at least a second predetermined region of the surface of the glass substrate (10) remains free of the water-soluble layer (20);
b) coating the surface of the glass substrate (10) with at least one non-water-soluble layer (30);
c) removing the water-soluble layer (20),
whereby steps a) to c) are carried out several times in succession.

2. The method according to claim 1, wherein the glass substrate (10) has an area of 1 m² to 60 m², preferably 19 m² to 60 m², particularly preferably 19 m² to 39 m².

3. The method according to claim 1 or 2, wherein the step of coating immediately follows the step of applying the water-soluble layer (20).

4. The method according to any one of claims 1 to 3, wherein the application of the water-soluble layer (20) is carried out by a printing process, in particular by a screen printing process, an offset printing process, a roller printing process or a digital printing process.

5. The method according to any one of claims 1 to 4, wherein the water-soluble layer (20) has a higher surface tension compared to the surface energy of the glass substrate, so that a hydrophobic glass substrate property is produced.

6. The method according to any one of claims 1 to 5, wherein the water-soluble layer (20) comprises a water-soluble colour, preferably a water-soluble ink with dissolved dye, and particularly preferably a pigment colour dispersed in water.

7. The method according to any one of claims 1 to 6, comprising a step of reducing the surface energy of the surface of the glass substrate (10) prior to step a), wherein the step of reducing the surface energy of the surface of the glass substrate (10) preferably comprises plasma polymerisation of hexamethyldisiloxane.

8. The method according to any one of claims 1 to 7, wherein the coating of the surface of the glass substrate (10) comprises a directional coating process, preferably sputtering or ion beam coating.

9. The method according to any one of claims 1 to 8, wherein removing the water-soluble layer (20) comprises removing the water-soluble layer (20) and the non-water-soluble layer (30) located on the water-soluble layer (20).

10. The method according to any one of claims 1 to 9, wherein removing the water-soluble layer (20) is carried out using a solvent, preferably a water-containing liquid.

11. The method according to claim 10, wherein the non-water-soluble layer (30) is also present on at least a part of the water-soluble layer (20) after the coating and mixes with the solvent upon removal of the water-soluble layer (20) using the solvent, wherein the step of removing the water-soluble layer (20) comprises a step of filtering from the non-water-soluble layer (30) present in the solvent.

12. The method according to any one of claims 1 to 11, wherein removing the water-soluble layer (20) is assisted by a mechanical process, preferably brushing.

13. The method according to any one of claims 1 to 12, comprising a step of cleaning the surface of the glass substrate (10) prior to applying the water-soluble layer (20).

14. The method according to any one of claims 1 to 13, wherein the first and second predetermined regions in a subsequent execution of steps a) to c) are at least partially different from a preceding execution of steps a) to c) in order to arrange a plurality of structures, preferably optical filters, next to each other.

## Revendications

1. Procédé de revêtement de substrats en verre de grande surface (10), ledit procédé comprenant les étapes suivantes :
a) application d'une couche hydrosoluble (20) sur au moins une première zone prédéterminée de la surface d'un substrat en verre (10), au moins une deuxième zone prédéterminée de la surface du substrat en verre (10) restant exempte de ladite couche hydrosoluble (20) ;
b) revêtement de la surface du substrat en verre (10) avec au moins une couche non hydrosoluble (30) ;
c) suppression de la couche hydrosoluble (20), les étapes a) à c) étant répétées plusieurs fois de suite.

2. Procédé selon la revendication 1, où le substrat en verre (10) présente une surface de 1 m² à 60 m², de préférence de 19 m² à 60 m², tout particulièrement de 19 m² à 39 m².

3. Procédé selon la revendication 1 ou la revendication 2, où l'étape de revêtement suit immédiatement l'étape d'application de la couche hydrosoluble (20).

4. Procédé selon l'une des revendications 1 à 3, où l'application de la couche hydrosoluble (20) est réalisée par un procédé d'impression, en particulier par un procédé de sérigraphie, un procédé d'impression offset, un procédé d'impression au rouleau ou un procédé d'impression numérique.

5. Procédé selon l'une des revendications 1 à 4, où la couche hydrosoluble (20) présente une tension de surface supérieure à l'énergie de surface du substrat en verre, de manière à générer une propriété hydrophobe du substrat en verre.

6. Procédé selon l'une des revendications 1 à 5, où la couche hydrosoluble (20) comprend une encre hydrosoluble, de préférence une encre hydrosoluble à colorant dissous, tout particulièrement une encre pigmentaire dispersée dans l'eau.

7. Procédé selon l'une des revendications 1 à 6, comprenant une étape de réduction de l'énergie de surface du substrat en verre (10) avant l'étape a), ladite étape de réduction de l'énergie de surface du substrat en verre (10) comprenant de préférence une polymérisation par plasma d'hexaméthyldisiloxane.

8. Procédé selon l'une des revendications 1 à 7, où le revêtement de la surface du substrat en verre (10) comprend un procédé de revêtement directionnel, de préférence une pulvérisation cathodique ou un revêtement par faisceau d'ions.

9. Procédé selon l'une des revendications 1 à 8, où la suppression de la couche hydrosoluble (20) comprend la suppression de la couche hydrosoluble (20) et de la couche non hydrosoluble (30) située sur la couche hydrosoluble (20).

10. Procédé selon l'une des revendications 1 à 9, où la suppression de la couche hydrosoluble (20) est effectuée au moyen d'un solvant, de préférence un liquide aqueux.

11. Procédé selon la revendication 10, où la couche non hydrosoluble (30) est également présente sur au moins une partie de la couche hydrosoluble (20) après le revêtement et se mélange au solvant lors de la suppression de la couche hydrosoluble (20) au moyen du solvant, l'étape de suppression de la couche hydrosoluble (20) comprenant une étape de filtration de la couche non hydrosoluble (30) présente dans le solvant.

12. Procédé selon l'une des revendications 1 à 11, où la suppression de la couche hydrosoluble (20) est assistée par un procédé mécanique, de préférence un brossage.

13. Procédé selon l'une des revendications 1 à 12, comprenant une étape de nettoyage de la surface du substrat en verre (10) avant l'application de la couche hydrosoluble (20).

14. Procédé selon l'une des revendications 1 à 13, où, lors d'une exécution suivante des étapes a) à c), la première et la deuxième zones prédéterminées sont au moins partiellement différentes par rapport à une application précédente des étapes a) à c), afin de juxtaposer plusieurs structures, de préférence des filtres optiques.
